(19) **Europäisches Patentamt European Patent Office Office européen des brevets**

(11) **EP 1 451 655 B1**

(12) **FASCICULE DE BREVET EUROPEEN**

(45) Date de publication et mention de la délivrance du brevet:
**13.10.2010 Bulletin 2010/41**

(21) Numéro de dépôt: **02799786.5**

(22) Date de dépôt: **06.12.2002**

(51) Int Cl.:
***G05B 23/02*** *(2006.01)* ***G05B 9/02*** *(2006.01)*

(86) Numéro de dépôt international:
**PCT/FR2002/004207**

(87) Numéro de publication internationale:
**WO 2003/048878 (12.06.2003 Gazette 2003/24)**

(54) **PROCEDE DE DIAGNOSTIC DE DEFAUTS DE FONCTIONNEMENT D'UN ENSEMBLE DE SYSTEMES ELECTRONIQUES, NOTAMMENT DANS UN VEHICULE AUTOMOBILE**

VERFAHREN ZUR FEHLERDIAGNOSTIK DES BETRIEBS EINER GRUPPE VON ELEKTRONISCHEN SYSTEMEN ,INSBESONDERE IN EINEM KRAFTFAHRZEUG

METHOD FOR DIAGNOSING OPERATING FAULTS OF AN ASSEMBLY OF ELECTRONIC SYSTEMS, IN PARTICULAR IN A MOTOR VEHICLE

(84) Etats contractants désignés:
**AT BE BG CH CY CZ DE DK EE ES FI FR GB GR IE IT LI LU MC NL PT SE SI SK TR**

(30) Priorité: **07.12.2001 FR 0115819**

(43) Date de publication de la demande:
**01.09.2004 Bulletin 2004/36**

(73) Titulaire: **RENAULT S.A.S.**
**92100 Boulogne Billancourt (FR)**

(72) Inventeurs:
• **BOUTIN, Samuel**
**F-78114 Magny les Hameaux (FR)**
• **SNYDER, Ray**
**F-75010 Paris (FR)**

(74) Mandataire: **Religieux, Vincent**
**Renault Technocentre**
**Sce 00267 - TCR GRA 2 36**
**1, avenue du Golf**
**78288 Guyancourt Cedex (FR)**

(56) Documents cités:
**WO-A-01/31412 WO-A-90/16048**
**US-A- 5 960 381**

**Description**

La présente invention est relative à un procédé de diagnostic de défauts de fonctionnement d'un ensemble de systèmes électroniques intégrés recevant et produisant des données multiplexées, au moins une desdites données étant susceptible de prendre une valeur particulière prédéterminée consécutivement à l'apparition d'un défaut de fonctionnement de l'un au moins des composants desdits systèmes. Un tel procédé est connu de WO 01/31412.

On connaît des ensembles de systèmes électroniques de ce type, conçus notamment pour équiper des véhicules automobiles. Un tel véhicule comprend couramment plusieurs systèmes assurant chacun l'exécution d'une prestation telle que la commande du moteur propulsant le véhicule, la gestion de la climatisation de l'habitacle, la gestion des liaisons du véhicule au sol (freinage, suspension...), la gestion de communications téléphoniques, etc, etc...

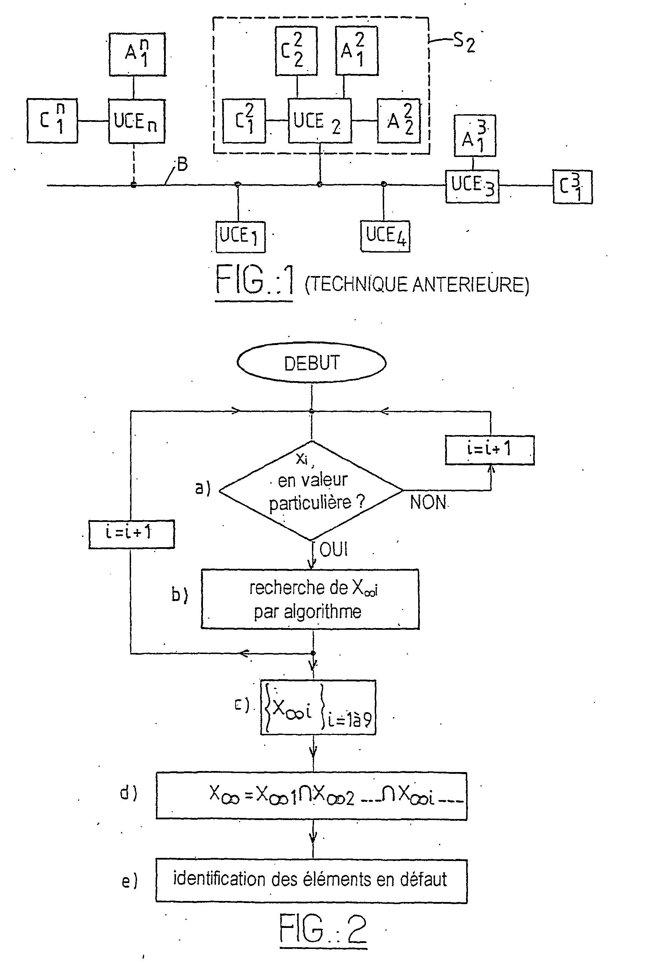

On a schématisé à la figure 1 du dessin annexé les composants matériels de l'ensemble de ces systèmes. -Ces composants comprennent essentiellement des unités de commande électroniques ou "calculateurs" $UCE_m$, chaque calculateur étant éventuellement connecté à des capteurs $C^n_i$ et à des actionneurs $A^m_{jr}$ tous les calculateurs étant connectés à au moins un même bus B pour y émettre ou recevoir des informations par exemple multiplexées, en provenance ou à destination des autres calculateurs connectés au bus B.

Ce multiplexage est obtenu notamment, comme cela est bien connu pour le bus CAN par exemple, en introduisant les informations en cause dans des messages matérialisés par des trames de signaux numériques.

A titre d'exemple illustratif, le système $S_2$ de "commande du moteur" comprend le calculateur $UCE_2$, plusieurs capteurs $C^2_i$ sensibles à des grandeurs telles que le régime du moteur, à combustion interne par exemple, la pression au collecteur d'admission de ce moteur, la pression de l'air extérieur, la température de l'eau de refroidissement du moteur, celle de l'air, l'état de charge dé la batterie, etc, etc..., et plusieurs actionneurs $A^2_j$. Le calculateur $UCE_2$ est dûment programmé pour exécuter plusieurs fonctions de commande du moteur telles que : la régulation de ralenti, la régulation de la richesse du mélange air/carburant, le réglage de l'avance à l'allumage de ce mélange et la recirculation des gaz d'échappement. Pour ce faire le calculateur $UCE_2$ exploite des informations venues des capteurs $C^2_i$ précités et élabore des signaux de commande des actionneurs $A^2_j$ constitués par une vanne de commande d'air additionnel et une bobine d'allumage de bougie pour la fonction "régulation de ralenti", un injecteur de carburant pour la fonction "régulateur de richesse", la même bobine d'allumage pour la fonction "avance de l'allumage" et une vanne pour la fonction "recirculation de gaz d'échappement".

Les autres "prestations" évoquées ci-dessus, "climatisation de l'habitacle", "liaison avec le sol", etc.. sont exécutées par des systèmes d'architecture analogue à celle présentée ci-dessus pour la commande du moteur.

Tous ces systèmes mis en communication par un même bus B constituent un réseau multiplexé. On conçoit alors que plusieurs fonctions relevant de systèmes différents peuvent exploiter des informations issues de mêmes capteurs, par exemple, ce qui évite de coûteuses redondances dans la structure de l'ensemble des systèmes. L'utilisation d'un réseau multiplexé permet aussi de réduire de manière très importante la longueur des lignes électriques interconnectant les différents éléments de l'ensemble. Un tel ensemble multiplexé permet aussi la mise en place de fonctions non classiques et éventuellement complexes, faisant intervenir parfois plusieurs systèmes et dites pour cette raison "transversales". A titre d'exemple illustratif et non limitatif, la perception de l'information "sac d'air (ou "airbag") déclenché", significative de ce que le véhicule a subi un choc, peut être traitée alors de manière à commander l'émission d'un appel au secours par un dispositif de téléphonie mobile embarqué dans le véhicule.

Le brevet français N° 2 810 758, publié le 28 décembre 2001, divulgue un procédé d'évaluation de la sûreté de fonctionnement d'un tel ensemble de systèmes intégrés recevant et produisant des données. Ce procédé permet d'évaluer l'impact de toute modification apportée au système pendant sa phase de conception, et donc de s'assurer que cette modification n'altère pas significativement la sûreté de fonctionnement de l'ensemble, comme cela est particulièrement nécessaire dans l'environnement d'un véhicule automobile pour assurer la sécurité des passagers.

Pendant la vie utile du véhicule, il arrive cependant que certains des composants de l'ensemble : capteurs, actionneurs, calculateur, bus, ... tombent en panne ou soient sujets à des fonctionnements défectueux et il convient donc de disposer de moyens de diagnostic de ces pannes ou défauts de fonctionnement. Il serait avantageux que ces moyens soient conçus de manière à permettre, pendant toute la phase de conception du véhicule, de vérifier que les évolutions apportées aux systèmes électroniques embarqués dans le véhicule pendant cette phase n'altèrent pas la capacité de diagnostic de ces moyens.

La présente invention a précisément pour but de fournir un procédé de diagnostic de défauts de fonctionnement affectant un ensemble de systèmes électroniques du type décrit ci-dessus, c'est-à-dire un ensemble dans lequel des systèmes produisent et échangent des données multiplexées.

La présente invention a aussi pour but de fournir un tel procédé dont la capacité de diagnostic puisse être évaluée à tout moment pendant la phase de conception d'un véhicule automobile équipé d'un tel ensemble de systèmes multiplexés.

On atteint ces buts de l'invention, ainsi que d'autres qui apparaîtront à la lecture de la description qui va suivre, avec un procédé de diagnostic de défauts de fonctionnement d'un ensemble de systèmes électroniques produisant et consommant des données, au moins une desdites données $(x_i)$ étant susceptible de prendre une valeur particulière $(x_{ip})$ prédéterminée, consécutivement à l'apparition d'un défaut de fonctionnement de l'un au moins des composants dudit ensemble, ce procédé comprenant les étapes suivantes :

a) au lancement d'une phase de diagnostic, on sélectionne les données $(x_i)$ qui présentent une valeur particulière $(x_{ip})$,
b) pour chaque donnée $(x_i)$ ainsi sélectionnée, on recherche le groupe $(X\infty_i)$ des données susceptibles d'être à l'origine de la valeur particulière $(x_{ip})$ prise par la donnée $(x_i)$,
c) on établit la liste $(X\infty)$ des données appartenant à l'intersection desdits groupes $(X\infty_i)$ de données, et
d) on analyse ladite liste $(X\infty)$ pour identifier le ou les composants de l'ensemble dont un défaut de fonctionnement est à l'origine des valeurs particulières $(x_{ip})$ prises par lesdites données $(x_i)$ .

Comme on le verra plus loin en détail, ce procédé permet, grâce à un algorithme de traitement de données permettant de remonter des effets observés de défauts de fonctionnement aux causes de ces défauts, d'identifier les organes ou appareils affectés par les défauts, ce qui permet ensuite d'y porter remède.
Selon d'autres caractéristiques de la présente invention, à l'étape c) ou d), on exclut de la liste $(X\infty)$ les données qui ne correspondent pas à des effets observés de défauts de fonctionnement, et/ou les données émises par au moins un composant prédéterminé du système, dont la fiabilité n'est pas douteuse, tel qu'un calculateur ou un bus, par exemple.
D'autres caractéristiques et avantages de la présente invention apparaîtront à la lecture de la description qui va suivre et à l'examen du dessin annexé dans lequel :

-    la figure 1 est un schéma d'un ensemble de systèmes électroniques qu'on se propose de doter de moyens de diagnostic de défauts de fonctionnement suivant la présente invention, cet ensemble étant décrit dans le préambule de la présente description et,
-    la figure 2 est un organigramme du procédé de diagnostic suivant l'invention.

Pour mettre en oeuvre celui-ci, on dispose d'une base de données qui rassemble toutes les informations permettant de décrire l'architecture matérielle, fonctionnelle et opérationnelle de l'ensemble de systèmes électroniques.
D'une manière analogue à celle décrite dans le brevet français N° 2 810 758 précité, également, on constitue un outil logiciel propre à interroger la base de données, par voie de requêtes, de manière à exécuter les algorithmes de recherche de causes de défauts de fonctionnement décrits ci-dessous. A titre d'exemple illustratif et non limitatif, on pourra utiliser à cet effet le langage de requête SQL, bien connu de l'homme de métier.
Si x est un objet de la base de données, on note dans la suite F(x) une requête sur x. On utilise la notation majuscule X pour dénommer un ensemble donné. F(X) est alors l'union des ensembles F(x) pour x appartenant à X. Ceci est cohérent avec l'exploitation des requêtes d'une base de données puisque le résultat d'une requête est un ensemble de solutions. Comme les résultats de plusieurs requêtes sur des éléments homogènes sont homogènes, on peut parler de leur union ou réunion.
Suivant l'invention, après lancement d'une phase de diagnostic de défauts de fonctionnement, on sélectionne (étape a de l'organigramme de la fig. 2) dans cette base chaque donnée $x_i$ (i de 1 à q) ayant pris une valeur particulière $x_{ip}$ à la suite de l'événement que constitue l'apparition d'un défaut de fonctionnement d'un ou de plusieurs composants de l'ensemble de systèmes électroniques considérés : capteur ou actionneur, calculateur, bus, ...
C'est ainsi qu'une donnée $x_i$ peut prendre une valeur particulière $x_{ip}$ prédéterminée significative de ce que la donnée est devenue invalide ou erronée, ou de ce qu'un calculateur, un bus, un capteur ou un actionneur est en panne ou en fonctionnement dégradé, ou encore de ce qu'une trame de signaux numériques contenant la donnée est invalide ou absente, etc, etc...
Ayant ainsi sélectionné chaque donnée $x_i$ affectée à une valeur particulière $x_{ip}$, on remonte, suivant l'invention, (étape b) à l'ensemble des données susceptibles d'être responsables de l'affectation à une valeur particulière $x_{ip}$ à $x_i$ et, de là, aux causes premières de cet état de fait, telles que, à titre d'exemple illustratif et non limitatif seulement, des défauts de fonctionnement des types cités ci-dessus.
Si on considère une donnée $x_i$ affectée à une valeur particulière $x_{ip}$, produite ou consommée par une ou plusieurs fonctions de l'ensemble de systèmes électroniques considéré, on note :

-    $F(x_i)$ la requête "ensemble des fonctions qui ont $x_i$ en donne de sortie, et qui peuvent affecter la valeur particulière $x_{ip}$ à $x_i$ produisent la en sortie",
-    $G(f,\{x_{jp}\})$ la requête "ensemble des données représentatives d'événements "redoutés" pour la fonction f, soit ceux pour lesquels elle entre en défaut et tels que f produit la donnée $x_j$ affectée à la valeur particulière $x_{jp}$ en sortie (la fonction f pouvant avoir plusieurs modes ou fonctionnement "dégradés"),

-

$$G(f, X) = \bigcup_{x \in X} G(f, \{x\})$$

On peut écrire alors :

$$X_1 = \{x_{ip}\} \cup G((F\{x_{ip}\}), \{x_{ip}\}) = X_o \cup G(F(X_o), X_o)$$

en posant $X_o = \{x_{ip}\}$,
$X_1$ étant l'ensemble des données représentatives d'événements qui ont pu causer l'émission de la donnée $x_i = x_{ip}$.
On définit de même :

$$X_2 = X_1 \cup G(F(X_1), X_1)$$

l'ensemble $X_2$ des données qui ont pu produire $x_i$ après que toutes les fonctions produisant $x_i$ se soient appliquées au plus deux fois.
On tire de ce qui précède la suite récurrente d'ensembles de données $(X_o, \ldots X_n, X_{n+1} \ldots)$ telle que :

$$X_o = \{x_i\}$$

et

$$X_{n+1} = X_n \cup G(F(X_n), X_n)$$

On appelle $X\infty_i$ la limite quand n tend vers $+\infty$ de la suite $X_n$, $X\infty_i$ désignant ainsi l'ensemble, ou groupe, des données représentatives d'événements qui ont pu causer l'émission de $x_i = x_{ip}$.
Il faut évidemment s'assurer de l'existence de $X\infty$ et de ce que l'ensemble trouvé $G(F(X\infty), X\infty)$ d'événements est un sous-ensemble propre de $X\infty$.
Sur le premier point il est clair que $X_n \subseteq X_{n+1}$. Par ailleurs, $X_n$ étant inclus dans l'ensemble des événements de l'ensemble de systèmes électroniques, il existe un indice N pour lequel $X_{N+1} = X_N$.
Il s'ensuit que :

$$X_{N+2} = X_{N+1} \cup G(F(X_{N+1}), X_{N+1}) = X_N \cup G(F(X_N), X_N) = X_{N+1} = X_N$$

Il en résulte, par récurrence, que $X\infty = X_N$, ce qui démontre l'existence de $X\infty$.
Sur le deuxième point, puisque $X_{N+1} = X_N \cup G(F(X_N), X_N)$, on tire, en substituant x∞ à $X_{N+1}$ et $X_N$ :

$$X_\infty = X_\infty \cup G(F(X_\infty), X_\infty)$$

La lecture de cette égalité de la droite vers la gauche fait apparaître que tout élément de $G(F(X\infty), X\infty)$ appartient à X∞ et donc que $G(F(X\infty), X\infty)$ est un sous-ensemble propre de X∞.
L'algorithme décrit ci-dessus est répété pour toutes les données $x_i$ telles que $x_i = x_{ip}$ (étape c), ce qui produit q groupes $X\infty_i$ (i de 1 à q) de données.
Suivant l'invention on établit alors la liste X∞ des données $x_i = x_{ip}$ qui appartiennent à l'intersection de ces groupes (étape d) soit:

$$X\infty = X\infty_1 \cap X\infty_2 ... \cap X\infty_i ...$$

et on remonte aux composants émetteurs de ces données pour identifier le ou les composants de l'ensemble de systèmes électroniques (capteurs, actionneurs, calculateurs, buts, ...) qui sont éventuellement affectés d'un défaut de fonctionnement (étape e).

Les défauts affectant ces composants peuvent réagir sur les entrées ou les sorties des fonctions exécutées dans l'ensemble de systèmes électroniques. Les défauts de sortie sont des valeurs particulières de données "réseau": donnée erronée (dont le défaut n'est pas diagnostiqué) donnée indiquée en défaut, donnée en valeur particulière, ou des valeurs particulières de données "filaires", délivrées par des capteurs ou actionneurs par exemple : donnée erronée ou indiquée en défaut.

Les défauts d'entrée des fonctions sont, outre les défauts précédemment cités : l'absence d'un calculateur, d'une trame ou d'un bus, la défaillance d'un actionneur ou d'un capteur, ou encore des défauts internes à un calculateur (en "reset", erreur de CRC, erreur sur tension d'alimentation ou de masse, UCE muet, etc...).

Le nombre des données contenues dans l'intersection $X\infty$ des ensembles de données $X\infty_i$ peut être important. Cependant seules celles de ces données qui sont représentatives de défauts de composants de l'ensemble de systèmes électroniques (capteurs, actionneurs, connecteurs, liaisons filaires, calculateurs, etc...) sont à retenir.

Par ailleurs, le conducteur du véhicule peut observer le bon fonctionnement ou certains non fonctionnement, ou fonctionnement dégradé, de dispositifs fonctionnels embarqués dans le véhicule (tel qu'une panne du dispositif de climatisation, par exemple).

De même, un garagiste chargé de réparer le véhicule en panne peut, grâce à des données de diagnostic émises sur le bus, identifier des causes de pannes possibles.

Toutes ces observations permettent de délimiter, dans l'intersection $X\infty$ des groupes de données $X\infty_i$, les données qui sont cohérentes avec les observations faites, ce qui permet d'exclure les autres dans la suite de la recherche des causes de pannes.

De même encore si on fait l'hypothèse, raisonnable, que l'origine d'une panne recherchée ne se trouve pas dans un calculateur ou un bus, du fait de la fiabilité élevée de ces appareils entièrement électroniques, on pourra encore faire sortir de $X\infty$ toutes les données qui trouvent leur origine dans ceux-ci.

C'est ainsi que l'on pourra retrouver assez facilement, suivant l'invention, un capteur ou un actionneur à l'origine d'un défaut de fonctionnement observé par le conducteur ou le garagiste, quand bien même la corrélation entre la panne observée et la cause de la panne serait loin d'être évidente.

A titre d'exemple illustratif et non limitatif d'une telle situation, on peut citer le cas où un conducteur observe une panne du dispositif de climatisation, dans un véhicule où on a programmé une mise hors service de ce dispositif quand le niveau du carburant contenu dans le réservoir du véhicule tombe en dessous d'un niveau bas, ceci pour réduire la consommation du véhicule jusqu'au moment où il sera possible de faire de nouveau le plein du réservoir.

Une recherche de la cause de cette panne conduite par le procédé algorithmique suivant l'invention peut révéler que la cause de cette panne vient d'un défaut de fonctionnement d'une sonde chargée de mesurer le niveau du carburant dans le réservoir de ce carburant.

On remarquera que le procédé de diagnostic de défauts suivant la présente invention peut être mis en oeuvre aussi bien pendant la phase de conception d'un véhicule équipé de systèmes électroniques multiplexés, qu'une fois le véhicule mis en service. Conformément à l'un des buts poursuivis par la présente invention, il est ainsi possible de vérifier que les évolutions subies par ces systèmes pendant cette phase de conception n'altèrent pas les capacités de diagnostic de défauts, suivant l'invention, des systèmes embarqués.

Bien entendu, l'invention n'est pas limitée au diagnostic de défauts affectant un ensemble de systèmes électroniques embarqués dans un véhicule automobile. Elle trouve application, au contraire, dans tout ensemble de systèmes électroniques recevant et produisant des données accessibles sur un bus.

**Revendications**

1. Procédé de diagnostic de défauts de fonctionnement d'un ensemble de systèmes électroniques comportant des composants ($A^n_i$; $C^n_i$;$UCE_n$;B), produisant et consommant des données, au moins une desdites données ($x_i$) étant susceptible de prendre une valeur particulière ($x_{ip}$) prédéterminée, consécutivement à l'apparition d'un défaut de fonctionnement de l'un au moins des composants ($A^n_i$; $c^n_i$;$UCE_n$;B) dudit ensemble, ce procédé étant **caractérisé par** les étapes suivantes :

a) au lancement d'une phase de diagnostic, on sélectionne les données ($x_i$) qui présentent une valeur particulière

$(x_{ip})$,

b) pour chaque donnée $(x_i)$ ainsi sélectionnée, on recherche le groupe $(X_{\infty i})$ des données susceptibles d'être à l'origine de la valeur particulière $(x_{ip})$ prise par la donnée $(x_i)$,

c) on établit la liste $(X_\infty)$ des données contenues dans l'intersection desdits groupes $(X_{\infty i})$ de données, et

d) on analyse ladite liste $(X_\infty)$ pour identifier le ou les composants de l'ensemble dont un défaut de fonctionnement est à l'origine des valeurs particulières $(x_{ip})$ prises par lesdites données $(x_i)$.

**2.** Procédé conforme à la revendication 1, **caractérisé en ce que**, à l'étape c) ou d), on exclut de la liste $(X_\infty)$ les données qui ne correspondent pas à des effets observés de défauts de fonctionnement.

**3.** Procédé conforme à l'une quelconque des revendications 1 ou 2, **caractérisé en ce que**, à l'étape c) ou d), on exclut de la liste $(X_\infty)$ les données émises par au moins un composant prédéterminé d'un système de l'ensemble.

**4.** Procédé conforme à la revendication 3, **caractérisé en ce que** ledit composant prédéterminé est un calculateur $(UCE_i)$ ou un bus $(B)$.

**5.** Procédé conforme à l'une quelconque des revendications 1 à 4, appliqué à un ensemble de systèmes électroniques embarqués dans un véhicule automobile.

**Claims**

**1.** Method of diagnosis of operating detects of a set of electronic systems comprising components $(A^n_i; C^n_i; UCE_n; B)$, producing and consuming data, at least one of the said data $(x_i)$ being liable to take a predetermined particular value $(x_{ip})$, subsequent to the occurrence of an operating defect of at least one of the components $(A^n_i; C^n_i; UCE_n; B)$ of the said set, this method being **characterized by** the following steps:

a) at the commencement of a diagnosis phase, the data $(x_i)$ which exhibit a particular value $(x_{ip})$ are selected,

b) for each datum $(x_i)$ thus selected, a search is conducted for the group $(X_{\infty i})$ of the data which are liable to be the source of the particular value $(x_{ip})$ taken by the datum $(x_i)$,

c) the list $(X_\infty)$ of the data contained in the intersection of the said groups $(X_{\infty i})$ of data is established, and

d) the said list $(X_\infty)$ is analysed to identify the component or components of the set for which an operating defect is the source of the particular values $(x_{ip})$ taken by the said data $(x_i)$.

**2.** Method in accordance with Claim 1, **characterized in that**, in step c) or d), the data which do not correspond to observed effects of operating defects are excluded from the list $(X_\infty)$.

**3.** Method in accordance with either of Claims 1 or 2, **characterized in that,** in step c) or d), the data emitted by at lease one predetermined component of a system of the set are excluded from the list $(X_\infty)$.

**4.** Method in accordance with Claim 3, **characterized in that** the said predetermined component is a computer $(UCE_i)$ or a bus $(B)$.

**5.** Method in accordance with any one of Claims 1 to 4, applied to a set of embedded electronic systems onboard a motor vehicle.

**Patentansprüche**

**1.** Verfahren zur Diagnose von Funktionsstörungen einer Einheit von elektronischen Systemen, die Bauelemente $(A^n_i; C^n_i; UCE_n; B)$ aufweisen, welche Daten erzeugen und verbrauchen, wobei mindestens einer der Datenwerte $(x_i)$ nach dem Auftreten einer Funktionsstörung mindestens eines der Bauelemente $(A^n_i; C^n_i; UCE_n; B)$ der Einheit einen vorbestimmten Einzelwert $(x_{ip})$ annehmen kann, wobei dieses Verfahren durch die folgenden Schritte **gekennzeichnet** ist:

a) beim Start einer Diagnosephase werden die Daten $(x_i)$ ausgewählt, die einen Einzelwert $(x_{ip})$ haben,

b) für jeden so ausgewählten Datenwert $(x_i)$ wird die Gruppe $(X_{\infty i})$ der Daten gesucht, die die Ursache des vom Datenwert $(x_i)$ angenommenen Einzelwerts $(x_{ip})$ sein können,

c) es wird die Liste (X∞) der Daten erstellt, die im Durchschnitt der Gruppen (X∞$_i$) von Daten enthalten sind, und
d) die Liste (X∞) wird analysiert, um das oder die Bauelement(e) der Einheit zu identifizieren, von denen eine Funktionsstörung die Ursache der von den Daten (x$_i$) angenommenen Einzelwerte (x$_{ip}$) ist.

2. Verfahren nach Anspruch 1, **dadurch gekennzeichnet, dass** im Schritt <u>c</u>) oder <u>d</u>) aus der Liste (X∞) die Daten ausgeschlossen werden, die keinen beobachteten Wirkungen von Funktionsstörungen entsprechen.

3. Verfahren nach einem der Ansprüche 1 oder 2, **dadurch gekennzeichnet, dass** im Schritt c) oder <u>d</u>) aus der Liste (X∞) die Daten ausgeschlossen werden, die von mindestens einem vorbestimmten Bauelement eines Systems der Einheit gesendet werden.

4. Verfahren nach Anspruch 3, **dadurch gekennzeichnet, dass** das vorbestimmte Bauelement ein Rechner (UCE$_i$) oder ein Bus (B) ist.

5. Verfahren nach einem der Ansprüche 1 bis 4, angewendet an eine Einheit von elektronischen Systemen an Bord eines Kraftfahrzeugs.

FIG.:1 (TECHNIQUE ANTERIEURE)

FIG.:2

## RÉFÉRENCES CITÉES DANS LA DESCRIPTION

**Documents brevets cités dans la description**

- WO 0131412 A
- KR 2810758
- FR 2810758